# EUROPEAN PATENT SPECIFICATION

(11) **EP 3 849 389 B1**
(45) Date of publication and mention of the grant of the patent: **20.03.2024**
(21) Application number: 19839695.4
(22) Date of filing: 13.09.2019
(51) Int. Cl.: A47J 43/14

(54) **DEVICE FOR BREAKING EGGS**
VORRICHTUNG ZUM AUFSCHLAGEN VON EIERN
DISPOSITIF POUR CASSER DES OEUFS

(30) Priority: 13.09.2018 NL 2021616; 13.09.2018 NL 2021617; 13.09.2018 NL 2021618
(43) Date of publication of application: 21.07.2021
(73) Proprietor: RM Processing B.V., 1852 TG Heiloo (NL)
(72) Inventor: MELK, Ron, 1852 TG Heiloo (NL); ROELOFS, Gerwin, 1852 TG Heiloo (NL)
(74) Representative: Patentwerk B.V.
(86) International application number: PCT/NL2019/050599
(87) International publication number: WO 2020/055256

(56) References cited:
- EP-A1- 0 636 335
- EP-A1- 1 988 805
- US-A- 1 988 030
- US-A- 3 098 495
- US-A- 3 589 419
- US-A- 4 137 838

## Description

The present invention relates to a device for for breaking eggs.

For the purpose of the mechanical processing of eggs, for example in professional bakery environments, egg processing plants and egg-sorting plants, eggs are supplied on trays which are stacked on top of one another. In this case, a layer of eggs in each case alternates with a tray, which is configured to accommodate eggs often in rows and/or in a matrix form.

Processing of the eggs is often carried out tray by tray, in which case the eggs have to be moved from the tray to a point for further processing which firstly, for example, comprises breaking the eggs and collecting the egg white and egg yolk.

According to the prior art, it is known to pick, to this end, the eggs from the top tray of a stack and, for example, deposit them on a conveyor belt. Picking up is carried out by placing a suction cup on each egg, thus applying an underpressure to the egg, so that the egg is suspended therefrom, and moving the eggs to their destination in this way, where the underpressure is cancelled and the eggs are consequently released.

This method has the significant drawback that a relatively large number of eggs break. This may in some cases be due to the fact that, for example, the egg is not able to withstand the underpressure of the suction cup, in other cases, for example, because the suction cup does not adjoin the egg properly and loses it during the move. Another drawback is that such a moving method is suboptimal from an energy point of view. Applying a vacuum costs energy and not only results in costs but is also a burden for the environment. Yet a further drawback is the fact that it is often not readily or not at all possible to process trays of inferior quality, such as wet or damaged cardboard trays.

Herein described but not forming part of the invention is a device for moving eggs which are arranged on a tray, comprising at least one egg carrier, at least one tray holder, a suspension for the egg carrier and the tray holder, by means of which the egg carrier and the tray holder are movable between at least one tray-carrying position in which the tray holder is situated under the egg carrier so that the tray holder can support a tray containing eggs thereon and an egg-carrying position in which the egg carrier is situated under the tray holder in order to support eggs.

By turning over the layer of eggs together with the tray and thus place the rows of eggs on the carriers, the need for individually picking them up using suction cups and the application of a vacuum are not longer necessary.

It makes also possible to process trays of any quality and any state or condition. The displaceable suspension may in principle be formed by any mechanical solution which is suitable for the purpose, such as a (robot) arm, or a carrousel to which the egg carrier and the tray holder are connected.

The egg carrier is not limited to any specific design either. Any configuration onto which a row of eggs can be positioned in a stable manner is satisfactory. One option is for the egg carrier to comprise a number of spaced-apart parallel elongate carriers. The carriers may be mutually connected by means of a fork. In this way, two such carriers may form a channel in which the eggs may be laid, but alternatively a series of separate compartments, cups or holders are also conceivable in which one or several eggs may be situated in each compartment, cup or holder.

The movement between the tray-carrying position and the egg-carrying position may, for example, comprise a joint rotation of the egg carrier and the tray holder together. In this case, that is to say before or during this rotation, it is also possible to perform a vertical movement in order to make the rotation possible, also followed by a possible horizontal movement after the rotation in order to deposit the eggs elsewhere.

The device may furthermore comprise a supply unit for supplying a tray with eggs to the tray holder. Such a supply unit is configured to remove a tray with eggs from a stack, support it and transfer it to the tray carrier. In this case, the supply unit may be substantially similar to the tray holder and comprise elongate carriers and may, in particular, be provided with apertures through which the elongate carriers of the tray holder can be moved.

In order to deposit the eggs, a device may furthermore comprise a collecting device for eggs, wherein the collecting device comprises a number of conveyors which extend parallel to each other, wherein the conveyors are arranged at an intermediate distance which corresponds to an intermediate distance between the carriers, and wherein the suspension of the egg carrier and the tray holder is configured to allow the carriers to descend between the conveyors of the collecting device, so that eggs situated on the carriers can be gripped by the conveyors. In this way, the eggs can be transferred without any problems.

These conveyors in turn may have any conceivable form, for example rails or troughs, on which the eggs can be placed in a stable manner. The guides then serve to transfer the eggs to a subsequent processing device or a conveyor belt which feeds them to such a processing unit.

Preferably, the conveyors are formed by belts, in which case the belts are displaceable for moving the eggs. To this end, the belts may comprise endless belts which are tensioned in order a rotatable drive for moving eggs situated on the belts. Such a drive may comprises rollers or, for example, pulleys which drive the belts.

As has already been mentioned in the introduction of the present application, the eggs are often supplied in the form of a stack, in which layers of eggs and trays alternate. Such a stack is then processed layer by layer. To this end, a device may comprise a support, with the support and the supply unit being movable with respect to each other.

In particular, such a support is vertically movable, with it being configured in order to move the support in each case vertically, so that the top tray with eggs is situated at a predetermined height and can be gripped and removed by the supply unit.

As an alternative, it is of course conceivable for the supply unit to approach the remaining stack of trays with eggs each time at a lower position in order to remove a tray therefrom.

When the eggs are placed on the collecting device, the tray which contained them also has to be removed. As soon as the tray is on the eggs, the clamp may in fact release the tray. To this end, the collecting device may comprise a catcher for a tray, so that the tray remains on top of the eggs and can be transported away.

From the collecting device, the eggs themselves may be supplied, for example, to a conveyor belt in order to be moved on, on which conveyor belt the collecting device and in particular the pairs of belts then have to end.

The clamp comprises a holder, such as a rod, plate or for example a hook, which may be placed under at least a part of the tray and which may be formed from an L-shaped profile and may be moved between the first and the second position by means of rotation.

Also described herein but not forming part of the invention is a method for moving eggs which are arranged on a tray, comprising arranging an egg carrier on a tray with eggs, holding the tray with eggs on a tray holder, rotating the tray holder and the egg carrier together with the eggs in such a way that the eggs come to lie on the egg carrier, in particular furthermore comprising lowering the supports between guide pairs with the eggs being transferred to the guide pairs.

The present invention relates to a device for breaking eggs.

Such devices are known and generally comprise at least one pair of supports for an egg, at least one blade which is movable between a position outside the supports and a position inside the supports for cleaving an egg situated on the supports, a lock for fixing the position of an egg placed on the supports, wherein the lock is movable between a first position in which the lock unblocks a space for placing an egg on the supports and a second position in which the lock blocks a space for removing an egg from the supports.

When using such a device, eggs are placed on the supports and then locked by the lock, after which the blade is moved from the position outside the supports to a position inside the supports in order to cleave an egg which is situated on the supports.

The locks used in this case are usually placed on an egg placed in the supports with a prestress, in particular a prestress applied by a spring, so that the egg is pushed onto the supports.

However, this has a number of drawbacks. During placement of an egg, the prestress increases the risk of the egg breaking as the pressure which the lock exerts on the egg will make the egg crack. This will result in eggs breaking in an uncontrolled way and at unintended locations, which not only leads to the device being soiled, but also to eggs being wasted and to shells or parts thereof ending up in the contents of the egg (egg white and egg yolk) intended for further use.

It is an object to overcome the abovementioned drawbacks with respect to the known devices for breaking eggs or to provide a usable alternative to the existing devices.

To this end, the invention provides a device for breaking eggs of the above-described kind, provided with a clamp which is configured to ensure that the lock bears against an egg in the second position without exerting pressure or to ensure that the lock is positioned just above an egg.

The supports may comprise two parallel pins, in particular pins provided with a local reduction in their thickness in order to form an accommodation space for an egg.

As the lock does not exert any pressure on the egg in the second position, the risk of damage, in particular the inadvertent breaking of the egg is reduced considerably. In this way, the invention removes the prior-art drawbacks as described above.

The lock may be clamped about a rotation axle so as to be rotatable between the first and second position, in order to be movable between the first and the second position by rotation about the rotation axle.

In use, the lock is turned after the placement of an egg until it is blocked by an obstacle. In this case, the direction of rotation is such that the lock is moved towards a side of the egg which faces away from the supports. An egg arranged on the supports forms said obstacle, so that a lock stops precisely as soon as it comes to bear against an egg.

The lock then bears against the egg without prestress, but a movement of the egg in the direction of the lock (for example caused by the blade) is not necessarily blocked by the lock.

According to the invention, the periphery of the lock is provided with a roughening, such as a toothing, for increasing grip on the lock, and the lock is provided with an adjustable clamp which is adjustable in order to allow the lock to be movable in a first position with respect to the clamp and to allow the clamp to engage with the roughening on the lock in a second state.

In a preferred embodiment of the present invention, the clamp is formed by a clamping ring provided with an activation surface and it is configured to block rotation of the lock with respect to the clamp if a force is exerted on the activation surface.

By exerting a force on the activation surface, the clamping ring is pulled tighter around the lock, so that the grip is increased and the lock assumes a fixed position with respect to the clamp. In this case, the clamping ring may comprise an open ring whose diameter may be reduced by applying a force on the activation surface. By performing this action, the clamping ring engages with the roughened surface of the lock. The clamping ring may be provided with an activator in order to exert this force.

In a preferred embodiment, several locks are arranged around the same rotation axle and several clamps are also arranged on the respective locks and a common activator is provided in order to simultaneously exert a force on the activation surfaces.

The activator may also be configured to move the locks until they bear against an egg. Depending on the eggs, the various locks may in this case end up in different positions. At the point in time when every lock bears against an egg which has been placed in the associated supports, all locks may be fixed in their position by the common activator. Subsequently, the eggs may be broken using the at least one blade.

For this purpose, at least one of the supports may comprise a rotation axle, about which the at least one blade is arranged so as to be rotatable. Preferably, both supports form rotation axles in which a blade is rotatably connected to each support. The egg may be broken by simultaneously or successively rotating both blades around the supports and striking an egg. In particular, both blades strike the egg at the same location, in other words: together they produce one incision.

As a result thereof, the egg is cleaved, but not necessarily opened.

In a subsequent embodiment, the supports can be moved apart in order to move the halves of a broken egg apart. In this case, the blades are kept in the position in which they struck the egg and are moved apart together with the supports. As the lock is in this case also kept in the second position, the two halves of the egg shell are moved apart in a controlled way and the contents of the egg, that is to say the egg white with the egg yolk, drops from the broken shell. The device may in this case be configured in such a way that the supports follow a path in which the smallest distance between the lock and the supports decreases when the egg halves are moved apart.

In a further embodiment, the device according to the invention is furthermore provided with a delivery unit for receiving eggs from a roller track and positioning them on the supports.

Such a delivery unit may comprise a rotatable axle which is provided with compartments for accommodating and delivering eggs, depending on the orientation, which delivery unit is provided between a feed belt and the supports.

In an embodiment, the device according to the present invention is provided with an operating member for moving the at least one blade, wherein the operating member has at least a first position in which the blade is situated in the position outside the supports and a second position in which the blade is situated in the position inside the supports. The operating member may in particular be moved between its various positions in different automated ways and is preferably configured in order to move, by moving from the first position to the second position, several blades from a position outside the supports associated with the respective blade to a position inside the supports associated with the respective blade.

In a particular embodiment, the operating member may to this end be provided with at least one magnet and may be movable along a track along which several magnets are situated which are arranged in such a way that the operating member is moved to and fro between the first and second position during movement along the track.

The invention furthermore relates to an assembly of several devices as claimed in any of the preceding claims comprising a common operating member, accommodated in a carrousel for transporting the operating member past at least two magnets in order to move the operating member between the first and second position, respectively.

Also described herein but not forming part of the invention is a device for separating an egg yolk and egg white of an egg, in particular such a device for use in a system for the automated processing of eggs.

Devices for separating eggs are known per se and often comprise a tray for collecting a non-separated egg white and egg yolk of an egg, which tray has at least one bottom surrounded by walls. In this case, it is known to provide the walls with openings or apertures which are situated at a distance from the bottom or extend in the direction of, but not as far as the bottom, thus forming a kind of pasta serving spoon.

Such devices have the drawback that although part of the egg white may be separated from the egg yolk, there is still egg white surrounding the egg yolk. A second drawback is that the egg yolk may drop at an angle in these devices and may thus break, as a result of which egg white and egg yolk become mixed up.

It is an object of the device for separating an egg yolk and egg white of an egg described herein to overcome the abovementioned drawbacks and to achieve a better separation of egg yolk and egg white.

This is achieved by a device for separating an egg yolk and egg white of an egg, comprising a tray for collecting of a non-separated egg white and egg yolk of an egg, which tray has at least one bottom which is surrounded by walls or is integrally formed, in which bottom an opening is provided, wherein the material from which the tray is made and which adjoins the opening projects from the part of the tray surrounding the opening in a sloping manner in a direction facing away from the walls.

Due to the fact that the opening is situated in the underside, all the egg white is able to run off the egg yolk, allowing a more complete separation than is the case with the devices according to the prior art. In this case, the opening is not placed on the underside in order to limit the risk of damaging the egg yolk.

This risk is limited by the fact that the part of the tray surrounding the opening projects in a sloping manner in a direction facing away from the walls.

In order to achieve a separation of egg yolk and egg white, it has been found that moving the still cohesive egg yolk and egg white has a positive effect. To this end, the device according to comprises a suspension means for the tray, in which the tray is suspended so as to be tiltable about a tilting axle which extends in a vertical direction and a drive for alternately tilting the tray about the tilting axle. This tilting may be effected directly, but preferably the tray is first held still for a few seconds after it has received the contents of an egg.

As a result of the alternating tilting action which, for example, comprises an angle of rotation of between 10 and 50 degrees, the egg yolk and the egg white in each case slide over the opening, with in each case a fraction of the egg white flowing off while the egg yolk remains behind in the tray. The egg white and the egg yolk may in this case be collected separately.

It has been found that favorable results are obtained if the slope has a radius of between 1 and 5 mm. On the one hand, this range results in a good separation of egg white and egg yolk while it has been found that it does not cause the egg yolk to break during tilting.

Preferably, the bottom of the device according to the invention has a V-shaped cross section in order to further stimulate running off of the egg white. In this case, the opening is most advantageously situated on the lowest point of the tray and with a V-shaped cross section may comprise, in particular, the point of the V. The tray may be substantially rectangular, that is to say that the open sides of the walls together form a rectangle. In this case, the opening is preferably elongate.

Also described herein but not forming part of the invention is a method for separating egg white and egg yolk from an egg, comprising collecting the egg white and the egg yolk of the egg in a device as claimed in one of the preceding claims; and alternately tilting the tray about a tilting axle extending in a vertical direction. After the alternate tilting has stopped and the egg white has flowed off to an egg white tray situated underneath, the egg way may be scanned to determine its purity, and the egg white and the egg yolk may be passed onto a collecting tray intended for the purpose. The egg yolk may then be passed through for further processing by tilting the tray further than during alternate tilting, preferably in a direction opposite to that in which the egg white was transported away.

Tilting preferably takes place between 2 and 6 times and at a frequency of between 0.7 and 0.5 Hz, in which case the frequency may decrease over time.

Also described herein but not forming part of the invention is a system for processing eggs, comprising a moving device for moving eggs which are arranged in rows on a tray; the moving device comprising at least one egg carrier, at least one tray holder, a suspension means for the egg carrier and the tray holder, by means of which the egg carrier and the tray holder are movable between at least one tray-carrying position in which the tray holder is situated under the egg carrier so that the tray holder can support a tray containing eggs thereon and an egg-carrying position in which the egg carrier is situated under the tray holder in order to support eggs, a supply unit for supplying a tray with eggs to the tray holder of the moving device in the tray-carrying position, a collecting device for eggs for collecting eggs from the egg carrier of the moving device in the egg-carrying position, wherein the collecting device comprises a number of parallel conveyors, wherein the conveyors are arranged at a corresponding distance apart which corresponds to an intermediate distance between the carriers, and wherein the suspension of the egg carrier and the tray holder is configured to allow the carriers to descend between the conveyors of the collecting device, so that eggs situated on the carriers can be gripped by the conveyors, a roller track for transferring the eggs from the conveyors and conveying them onwards, a delivery unit for transferring eggs from a roller track and positioning them on supports of an egg-breaking device, which egg-breaking device comprises at least one pair of supports for an egg, at least one blade which is movable from a position outside the supports to a position inside the supports for cleaving an egg situated on the supports, a lock for fixing the position of an egg placed on the supports, wherein the lock is movable between a first position wherein the lock unblocks a space for placing an egg on the supports and a second position wherein the lock blocks a space for removing an egg from the supports and is provided with a clamp which is configured to ensure that the lock bears against an egg in the second position without exerting pressure or to ensure that the lock is positioned just above an egg, and configured for dispensing the egg yolk and the egg white of a broken egg to a separating device for separating an egg yolk and egg white of an egg, comprising a tray for collecting a non-separated egg white and egg yolk of an egg, which tray has at least one bottom surrounded by walls, in which bottom an opening is provided, wherein the material adjoining the opening and from which the tray is made projects in a sloping manner from the part of the tray surrounding the opening in a direction facing away from the walls, a suspension means for the tray, wherein the tray suspended so as to be tiltable about a tilting axle which is suspended in a vertical direction and a drive for alternately tilting the tray about the tilting axle.

The invention will now be explained in more detail by means of the following figures, in which:
- Fig. 1 shows a first diagrammatic overview of a device for moving eggs;
- Fig. 2 shows a second diagrammatic overview of a device for moving eggs;
- Fig. 3 shows a supply unit for trays with eggs in detail;
- Fig. 4 shows an accommodation device for eggs;
- Fig. 5 shows a discharge device for trays;
- Fig. 6 shows a device according to the present invention in a first position;
- Fig. 7 shows a device according to the present invention in a second position;
- Figs. 8a-c show details of a lock and clamp according to the present invention;
- Figs. 9 show a device according to the present invention in a second and third position;
- Fig. 10 shows a delivery device;
- Figs. 11a and b show a side view and a front view of a device for separating an egg yolk and egg white of an egg; and
- Figs. 12a-d show various views of the operating member and the blades.

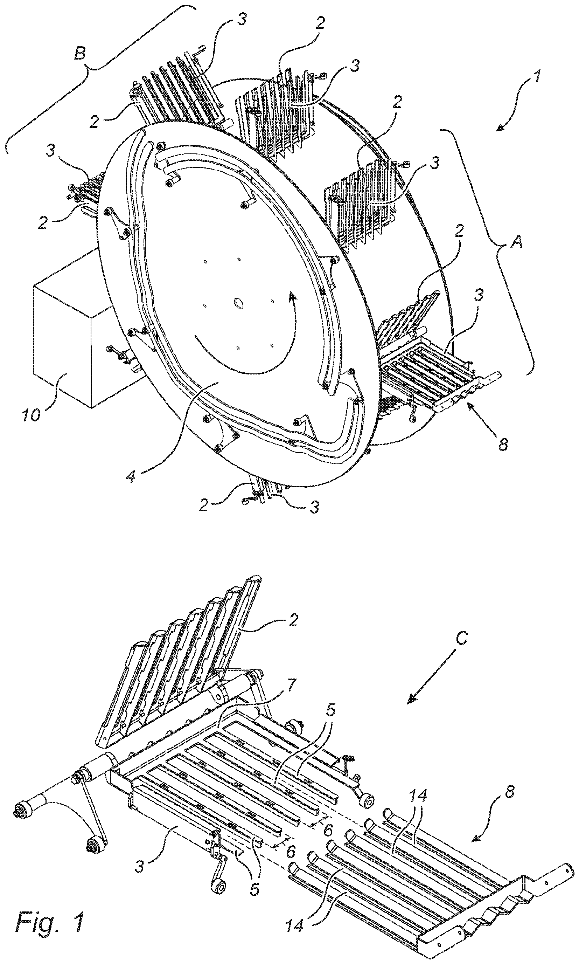

Fig. 1 shows a device for moving eggs provided with a number of pairs of egg carriers 2 and tray holders 3. The egg carriers 2 and tray holders 3 are movable between a tray-carrying position A and the egg-carrying position B because they are arranged so as to be jointly rotatable around a wheel 4. In the tray-carrying position A, a tray holder 3 is situated under an egg carrier 2 in order for the tray holder 3 to support a tray with eggs (not shown) thereon, in the egg-carrying position B, the egg carrier 2 is situated under the tray holder 3 in order to support eggs. Due to the fact that the egg carriers 2 and tray holders 3 are connected to the wheel 4, they successively go from the tray-carrying position A to the egg-carrying position B and then back to the tray-carrying position A when the wheel 4 is rotated. Eggs which are present on the trays in the tray-carrying position A in this case come to lie on the egg carrier in the egg-carrying position B.

The egg carriers 2 and tray holders 3 are placed at such a distance apart that there is only a little clearance for the eggs between the tray and the egg carrier 2, so that they only make a minimal drop from or together with the tray upon rotation towards the egg carrier and thus do not break in this case. This distance depends on the size of the eggs which are expected in the trays and may be adjustable in order to be able to process eggs of different sizes.

Detail C shows that the egg carriers 2 comprise a number of spaced-apart elongate carriers 5 arranged parallel to each other. These intermediate distances 6 have been chosen such that the distance between two adjacent carriers 5 is smaller than the width of the eggs to be carried by these carriers 5, so that the eggs do not fall through the carriers 5. At one end 7, the carriers 5 are connected to each other and are thus arranged in a fork-like configuration.

Several pairs of egg carriers 2 and tray holders 3 are connected to the wheel 4, each of which pass from a tray-carrying position A to an egg-carrying position B during rotation of the wheel 4, and are at different stages between these two positions. During these stages, the mutual orientation of the egg carrier 2 and the tray holder 3 for each pair of egg carriers 2 and tray holders 3 may also change, so that trays with eggs may be placed between the tray holder 3 and the egg carrier 2 and the tray which contained eggs which have been placed on the egg carrier 2 may be removed.

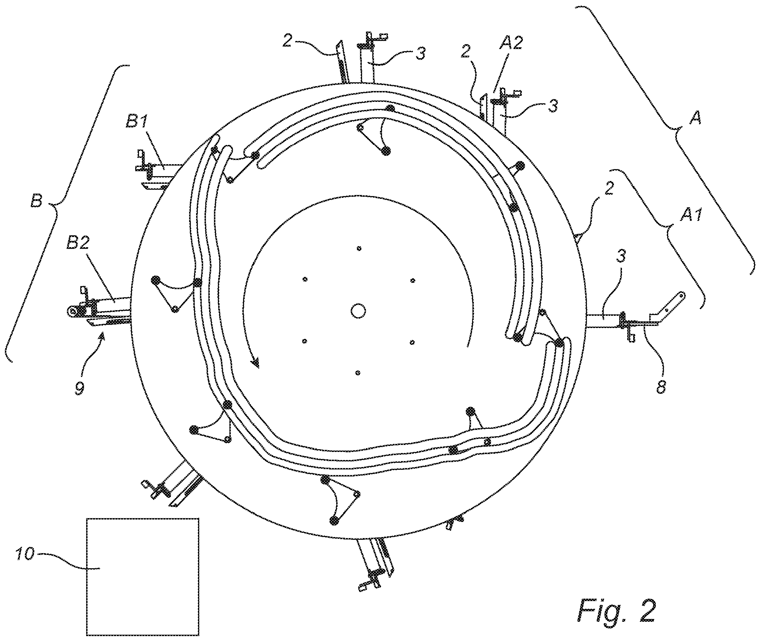

Fig. 2 shows the various orientations of the tray holder 3 and the egg carrier 2 with respect to each other during rotation of the wheel. As can be seen, in the tray-carrying position A in this example, the egg carrier is initially moved away from the tray holder A1, so that a tray with eggs can be supplied. As soon as this tray with eggs has been placed, the tray holder 3 and the egg carrier 2 can be moved towards each other, as can be seen in position A2.

In the egg-carrying position B, tray holder 3 and egg carrier 2 initially extend parallel to each other, after which the tray holder 3 is moved away from the egg carrier 2 in position B2 in the illustrated example, in order to enable removal of the tray of the eggs. Furthermore, in position B1 in the figure, a tray which is held upside down may be tapped in order to detach any eggs which may have remained stuck.

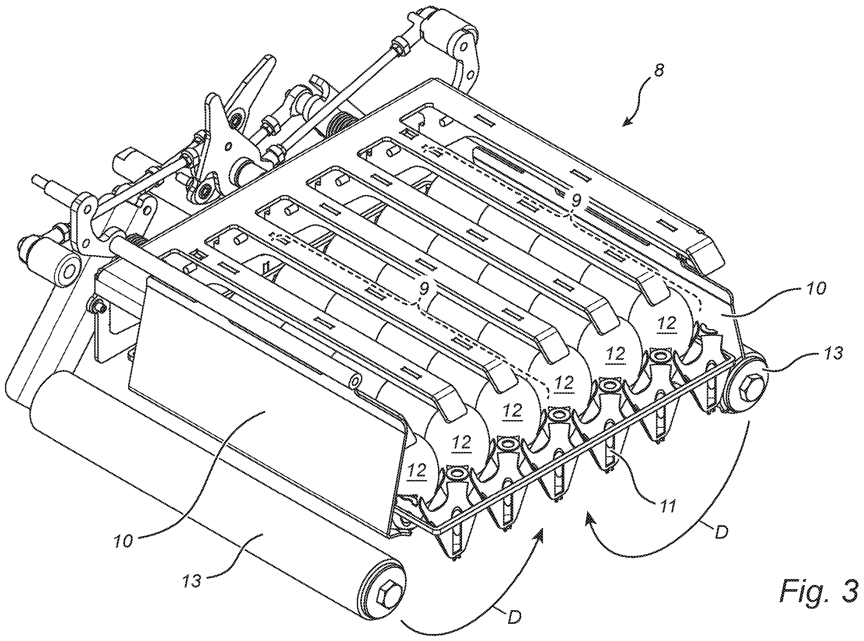

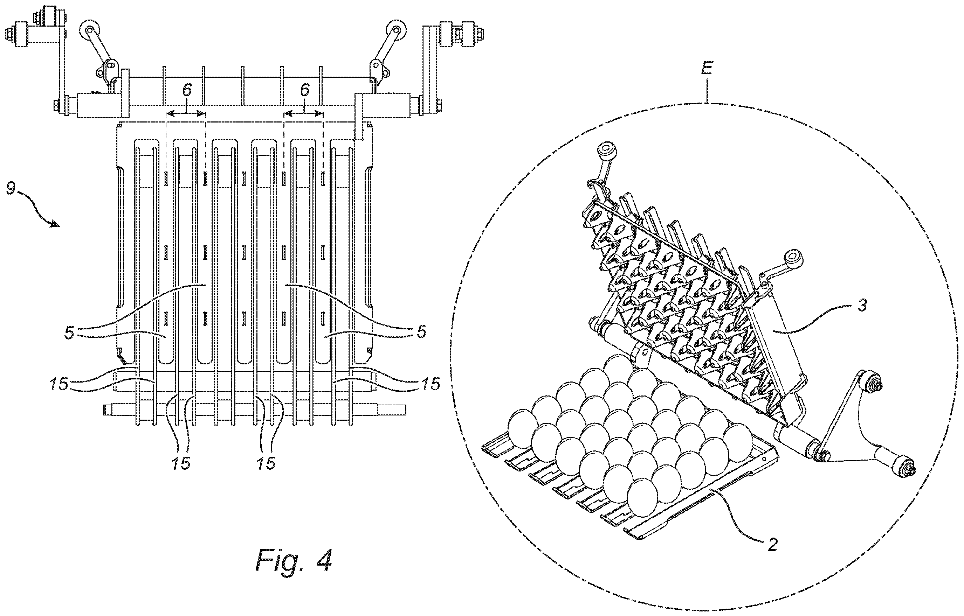

Fig. 1 also shows the location of a supply unit 8 and Fig. 2 shows the position of a collecting device 9 and the position of a tray store 10. This supply unit 8 and collecting device 9 are explained in more detail with reference to Figs. 3 and 4.

Fig. 3 shows a supply unit 8 for trays with eggs in detail. The supply unit comprises two clamps 10 for clamping at least one edge of egg tray 11 with eggs 12. The eggs are arranged in rows 9. The tray holder furthermore comprises two support elements 13 for supporting a part of an egg tray 11 which is remote from the edge. The support elements are movable in the direction of the arrows D for supporting an egg tray 11 containing eggs 12. The supply unit is provided with apertures 14 through which the elongate carriers of the tray holder can be moved.

Fig. 4 shows a collecting device 9 for eggs which comprises a number of conveyors 15 which extend parallel to each other, wherein the conveyors 15 are arranged at a mutual distance apart which corresponds to the intermediate distance between the carriers, and wherein, as is illustrated in box E, the suspension of the egg carrier 2 and the tray holder 3 is configured to allow the carriers 5 to descend between the conveyors 15 of the collecting device 9 so that eggs 11 present on the carriers 5 may be gripped by the conveyors 15. The conveyors 15 are formed by endless belts which are tensioned about a rotatable drive for moving the eggs situated on the belts.

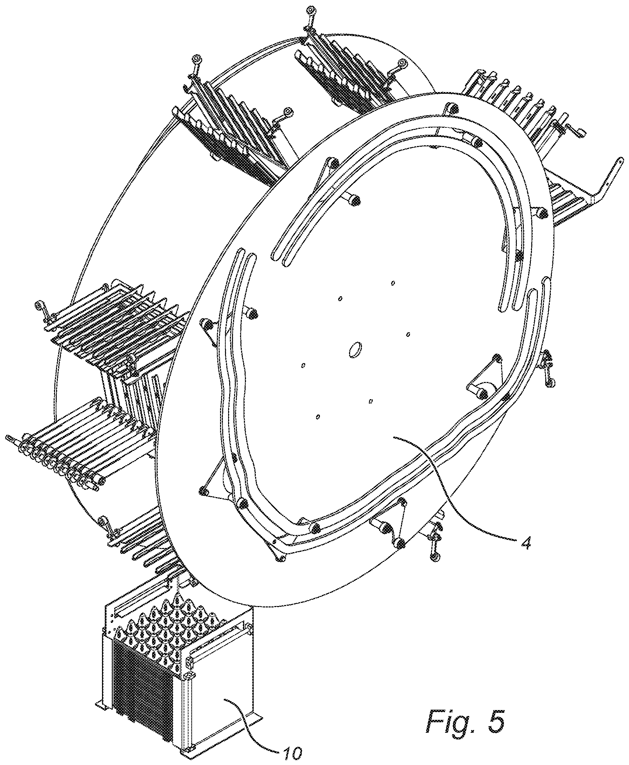

Fig. 5 shows a discharge device 20 for trays on which the empty trays are collected after the eggs have been transported away.

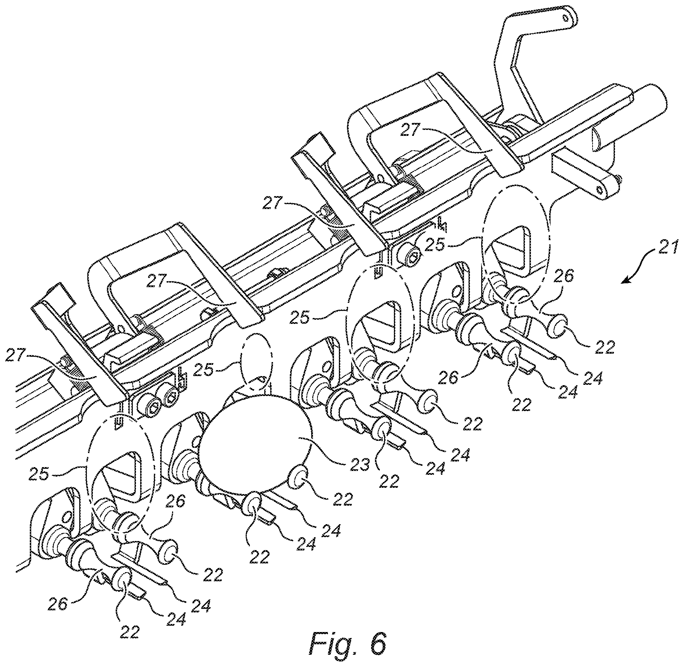

Fig. 6 shows a device 21 for breaking eggs according to the present invention in a first position. The device comprises four pairs of supports 22 for an egg 23, each with a pair of blades 24, in the illustrated position, a position placed outside the supports, and a lock for fixing the position. The supports comprise two parallel pins 22, in particular pins provided with a local reduction 26 of their thickness, in order to form an accommodation space for an egg 23. Above each support, a lock 27 is provided which, in the illustrated situation, is in a first position, wherein the lock 27 unblocks a space 25 for placing an egg 23 on the support 22. In the illustrated situation, an egg 23 has in this case already been placed on the support 22.

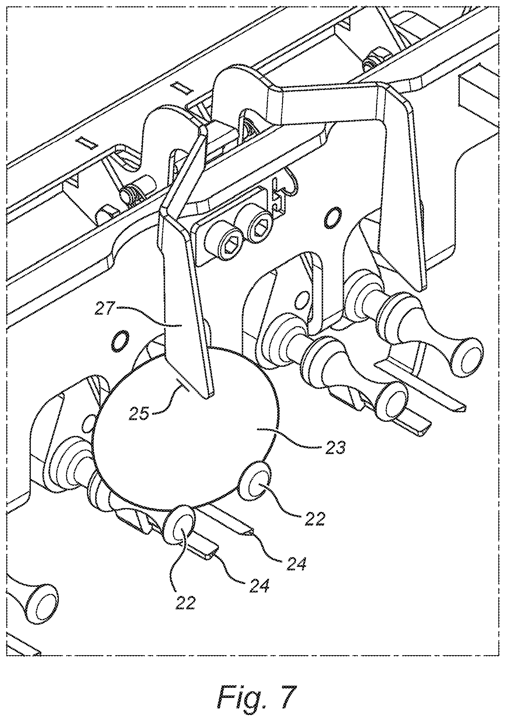

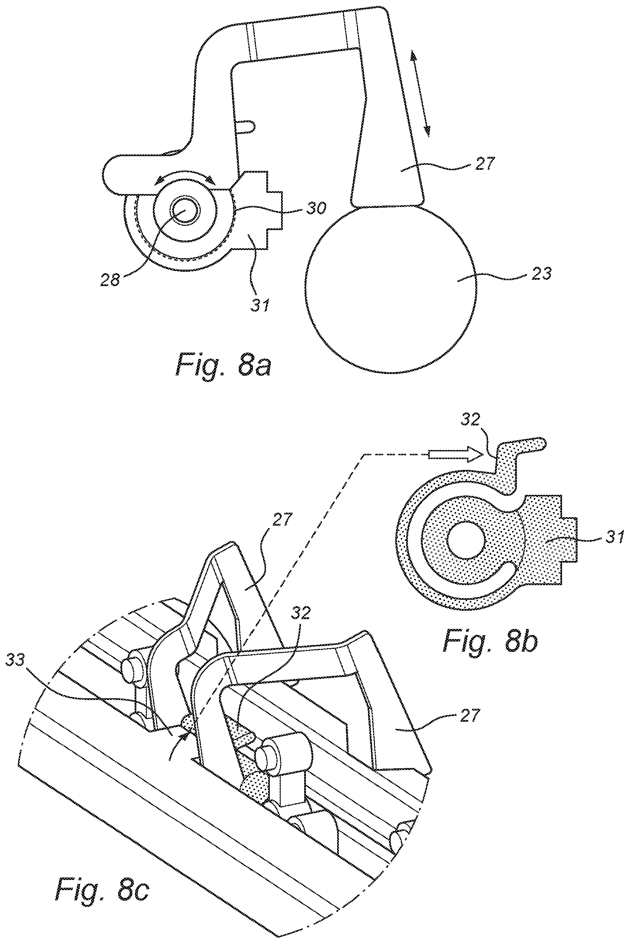

Fig. 7 shows a detail of the device 21 from Fig. 21. The lock 27 is placed in a second position, wherein it blocks the space for removing an egg from the supports. In this case, the lock 27 is held against the egg 23 in such a manner as not to exert pressure thereon by a clamp (see Figs. 8a-c).

Fig. 8a shows details of a lock 27 and clamp 31 according to the present invention. The lock 27 is clamped about a rotation axle 28 so as to be rotatable between the first and the second position, in order to be movable between the first and the second position by rotation about the rotation axle 28. The movement of the rotation is limited by an obstacle. In Fig. 8a, this situation is actually achieved by the fact that the lock 27 bears against the egg 23.

The periphery of the lock 27 is provided with a roughening 30, formed by a toothing, for increasing the grip, and with an adjustable clamp 31 in order to allow the lock 27 to be movable in a first position with respect to the clamp 31 and to allow the clamp 31 to engage with the roughening 30 on the lock 27 in a second state.

Fig. 8b shows that the clamp 31 comprises an activation surface 32 and is configured to block the rotation of the clamp 31 with respect to the rotation axle 28 if a force is exerted on the activation surface 32.

Fig. 8c shows that there are several locks 27 around the same rotation axle, with an activator 33 being provided in order to simultaneously activate the activation surface 32 of an associated clamp 31.

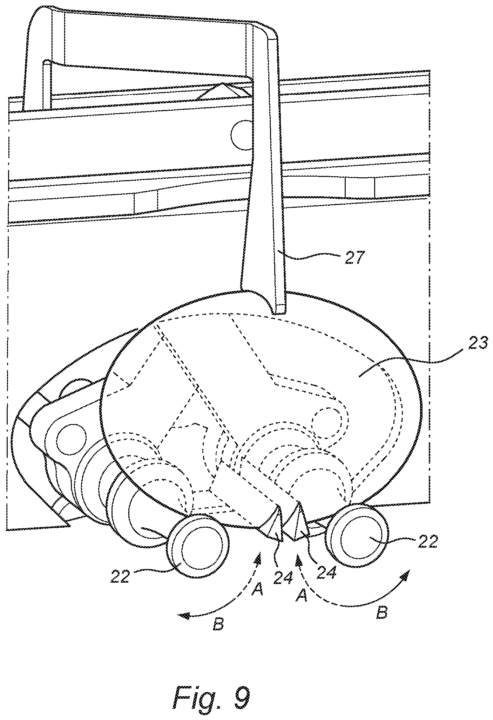

Fig. 9 shows the device 21 from the preceding figures in a third position. The supports 22 each form a rotation axle around which a blade 24 is arranged so as to be rotatable. In Fig. 1, the blades 24 are in a first position, outside the supports 2, as a result of which they do not touch an egg 23 which has been placed on the supports. In Fig. 8a, the blades have been brought to a second position by rotation about the supports 22 in the direction A, as a result of which they have ended up between the supports 22. In this case, they cleave the shell of an egg 23 which is situated on the supports 22.

After the blades 24 have been brought to the second position, they are moved in the direction B, together with the supports 22, in which the shell of the egg is broken in half so that the egg white and the egg yolk can be collected. When the supports 22 are being moved apart, the egg is lifted upwards, resulting in the lock 27 exerting pressure on the shell.

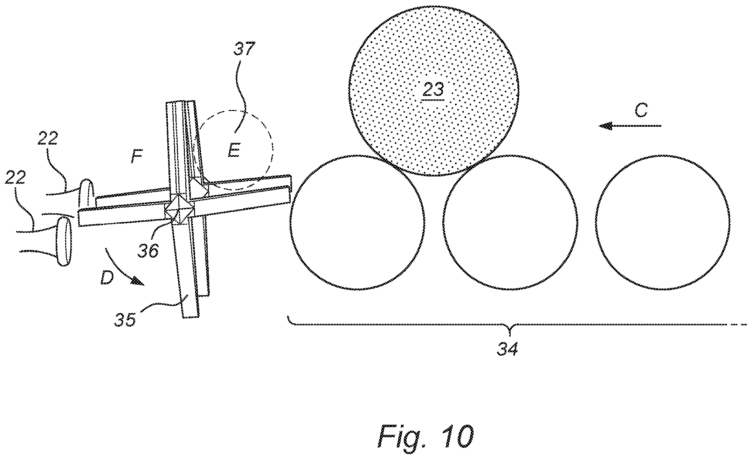

Fig. 10 shows a delivery unit 35 for transferring an egg 23 from a roller track 34 and positioning that egg 23 on the supports 22. The delivery unit comprises a rotatable axle 36 which is provided with compartments 37 for accommodating E and delivering F eggs, depending on the orientation, which delivery unit 35 is arranged between a feed belt, in particular a roller track 34, and the supports 22 of the egg breaker. The delivery unit is dimensioned and arranged in such a way that it does not touch the supports 22 when transferring an egg 23.

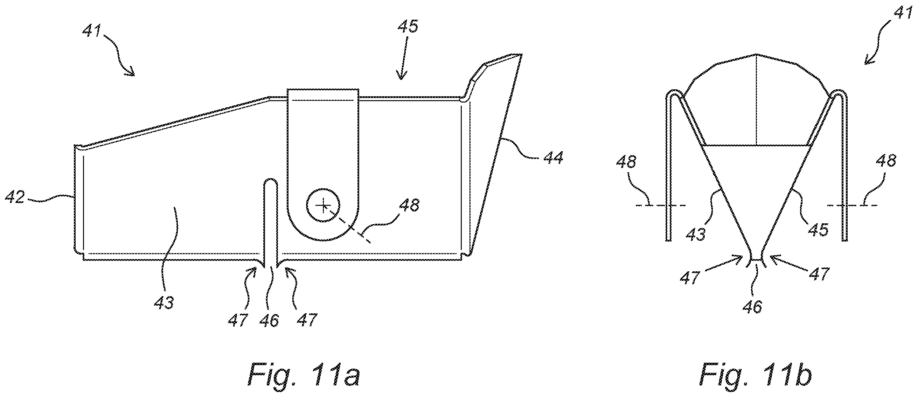

Figs. 11a and b show a side and a front view of a device 41 for separating an egg yolk and egg white of an egg, comprising a tray, for collecting of a non-separated egg white and egg yolk of an egg, which tray has a bottom which is surrounded by integrally formed walls 42, 43, 44, 45, in which bottom an opening 46 is provided, wherein the material adjoining the opening and from which the tray is made projects in a sloping manner 47 from the part of the tray surrounding the opening in a direction facing away from the walls. The tray is suspended so as to be tiltable about a tilting axle 48 which extends in a vertical direction and is provided with a drive (not shown) for alternately tilting the tray about the tilting axle 48.

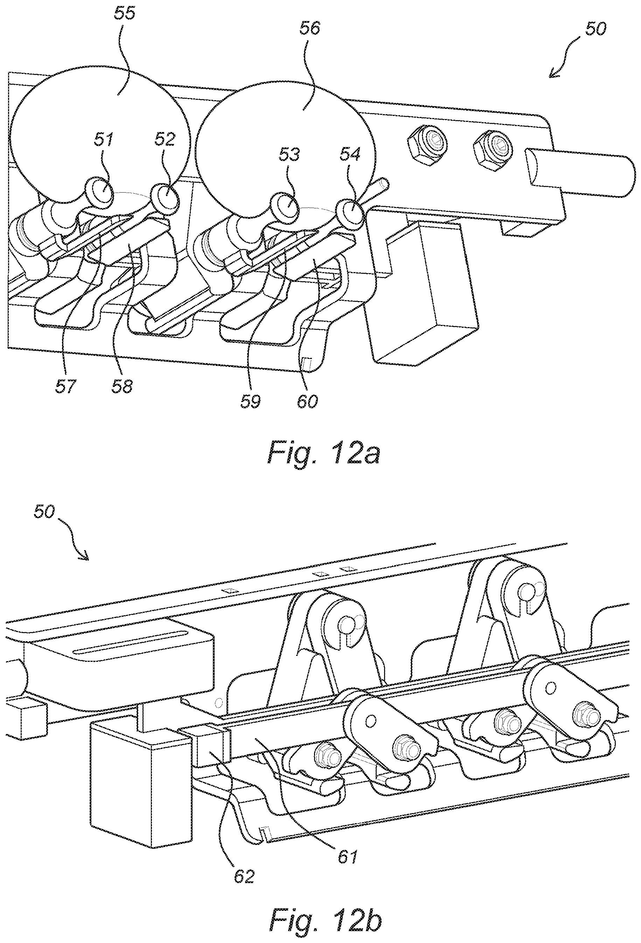

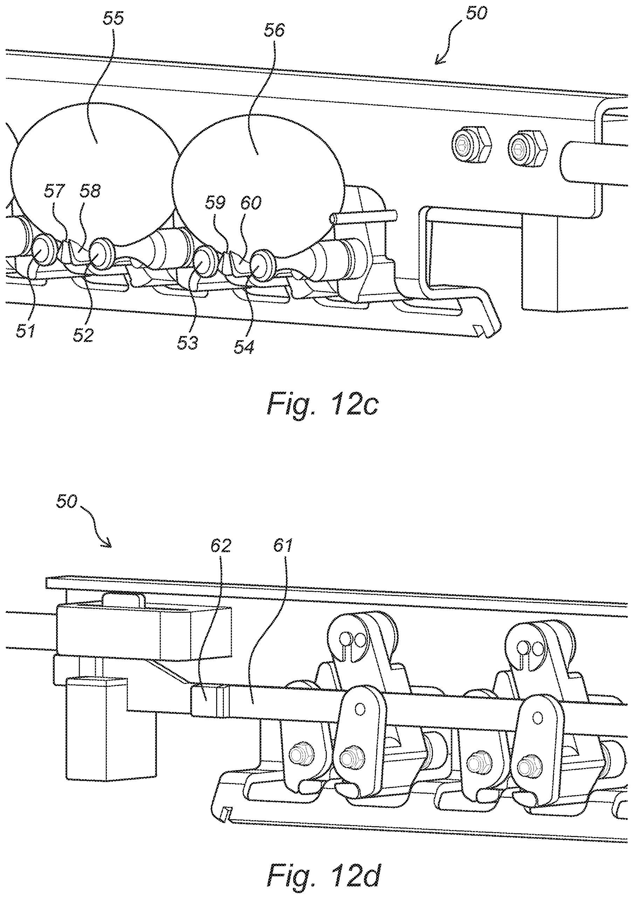

Figs. 12a and b respectively show a front and rear view of an embodiment of a device 50 for breaking eggs according to the invention in a first position, and Figs. 12c and d respectively show a front and rear view of the same embodiment 50 in a second position.

The device 50 comprises several supports 51-54 for an egg 55, 56 and four blades 57-60, which are movable from a position outside the supports (Figs. 12a and 12b) to a position inside the supports (Figs. 12c, 12d) in order to cleave an egg which is situated on the supports, a lock for fixing the position of an egg situated on the supports, wherein the lock is movable between a first position wherein the lock unblocks a space for placing an egg on the supports and a second position wherein the lock blocks a space for removing an egg from the supports, a clamp to ensure that the lock bears against an egg in the second position without exerting pressure or to ensure that the lock is positioned just above an egg. The device 50 furthermore comprises an operating member 61 for moving the blades 57-60, wherein the operating member has at least a first position in which the blades 57-60 are in the position outside the supports (Figs. 12a and 12b) and a second position in which the blades 57-60 are in the position inside the supports (Figs. 12c and 12d). The operating member 61 is configured in order to move, by moving from the first position to the second position, several blades from a position outside the supports associated with the respective blade to a position inside the supports associated with the respective blade, and is provided with a magnet 62 (only one of which is shown) on each side, the operating member 61 being movable over a track along which several magnets 64 are situated which are arranged in such a way that the operating member is moved to and fro between the first and second position when it moves along the track and thus the blades 57-60 are in the position outside the supports (Figs. 12a and 12b) and a second position in which the blades 57-60 are situated in the position inside the supports (Figs. 12c and 12d).

## Claims

1. A device (21, 50) for breaking eggs (23, 55, 56), comprising:
- at least one pair of supports (22, 51-54) for an egg;
- at least one blade (24, 57-60),
∘ which is movable from a position outside the supports to a position inside the supports for cleaving an egg situated on the supports;
- a lock (27) for fixing the position of an egg placed on the supports;
wherein:
∘ the lock is movable between:
▪ a first position wherein the lock unblocks a space for placing an egg on the supports; and
▪ a second position wherein the lock blocks a space for removing an egg (55, 56) from the supports (51-54);
**characterized in that**
∘ the periphery of the lock (27) is provided with a roughening (30), such as a toothing, for increasing the grip, and wherein the lock (27) is provided with an adjustable clamp (31) in order to allow the lock to be movable in a first position with respect to the clamp (31) and to allow the clamp (31) to engage with the roughening (30) on the lock (27) in a second state, the clamp being configured
∘ to ensure that the lock bears against an egg in the second position without exerting pressure or to ensure that the lock is positioned just above an egg.

2. The device as claimed in claim 1, comprising an operating member (61) for moving the at least one blade (24, 57-60) wherein the operating member (61) has at least a first position in which the blade is situated in the position outside the supports (22, 51-54) and a second position in which the blade is situated in the position inside the supports.

3. The device as claimed in claim 2, wherein the operating member (61) is configured in order to move, by moving from the first position to the second position, several blades (24, 57-60) from a position outside the supports (22, 51-54) associated with the respective blade to a position inside the supports associated with the respective blade.

4. The device as claimed in claim 2 or 3, wherein the operating member (61) is provided with at least one magnet (62), and is movable along a track along which several magnets (64) are situated which are arranged in such a way that the operating member (61) is moved to and fro between the first and second position during movement along the track.

5. The device as claimed in one of the preceding claims, wherein the supports comprise two parallel pins (22), in particular pins (22) provided with a local reduction (26) in their thickness in order to form an accommodation space for an egg.

6. The device as claimed in one of the preceding claims, wherein the lock (27) is clamped about a rotation axle (28) so as to be rotatable between the first and the second position, in order to be movable between the first and the second position by rotation about the rotation axle (28).

7. The device as claimed in one of the preceding claims, wherein at least one of the supports (22) comprises a rotation axle about which the at least one blade is arranged so as to be rotatable.

8. The device as claimed in claim 6, wherein the clamp (31) is formed by a clamping ring (32) which comprises an activation surface (32) and is configured to block rotation of the clamp (32) with respect to the rotation axle (28) if a force is exerted on the activation surface (32).

9. The device as claimed in claim 8, wherein the clamping ring comprises an activator (33) in order to exert a clamping force on the activation surface (32).

10. The device as claimed in claim 9, wherein several clamps (31) are arranged around the same rotation axle (28) and wherein an activator (33) is provided in order to simultaneously activate the activation surfaces (32).

11. The device as claimed in one of the preceding claims, wherein the supports (22, 51-54) can be moved apart in order to move the halves of a broken egg apart.

12. The device as claimed in one of the preceding claims, comprising a delivery unit (35) for receiving eggs (23, 55, 56) from a roller track (34) and positioning them on the supports (22, 51-54).

13. The device as claimed in claim 12, wherein the delivery unit comprises a rotatable axle (36) which is provided with compartments (37) for accommodating and delivering eggs, depending on the orientation, which delivery unit (35) is provided between a feed belt and the supports (22).

14. An assembly of several devices as claimed in any of the preceding claims comprising a common operating member (61), accommodated in a carrousel for transporting the operating member (61) past at least two magnets (64) in order to move the operating member (61) between a first and a second position, respectively.

## Patentansprüche

1. Vorrichtung (21, 50) zum Aufschlagen von Eiern (23, 55, 56), die Folgendes umfasst:
- mindestens ein Paar Stützen (22, 51-54) für ein Ei;
- mindestens eine Klinge (24, 57-60),
- die von einer Position außerhalb der Stützen an eine Position innerhalb der Stützen zum Spalten eines auf den Stützen befindlichen Eis bewegbar ist;
- eine Verriegelung (27) zum Fixieren der Position eines auf den Stützen platzierten Eis;
wobei:
- die Verriegelung zwischen Folgenden beweglich ist:
- einer ersten Position, in der die Verriegelung einen Raum zum Platzieren eines Eis auf den Stützen entsperrt; und
- einer zweiten Position, in der die Verriegelung einen Raum zum Entfernen eines Eis (55, 56) von den Stützen (51-54) sperrt;
**dadurch gekennzeichnet, dass**
- die Peripherie der Verriegelung (27) mit einer Aufrauhung (30), wie z. B. einer Verzahnung, zur Erhöhung des Greifvermögens versehen ist und wobei die Verriegelung (27) mit einer verstellbaren Klemme (31) versehen ist, um zu gestatten, dass die Verriegelung in eine erste Position bezüglich der Klemme (31) beweglich ist, und um zu gestatten, dass die Klemme (31) in einem zweiten Zustand mit der Aufrauhung (30) an der Verriegelung (27) in Eingriff gelangt, wobei die Klemme dazu konfiguriert ist,
- sicherzustellen, dass die Verriegelung in der zweiten Position an einem Ei anliegt, ohne Druck auszuüben, oder sicherzustellen, dass die Verriegelung direkt über einem Ei positioniert ist.

2. Vorrichtung nach Anspruch 1, die ein Betätigungsglied (61) zum Bewegen der mindestens einen Klinge (24, 57-60) umfasst, wobei das Betätigungsglied (61) mindestens eine erste Position, in der sich die Klinge in der Position außerhalb der Stützen (22, 51-54) befindet, und eine zweite Position, in der sich die Klinge in der Position innerhalb der Stützen befindet, aufweist.

3. Vorrichtung nach Anspruch 2, wobei das Betätigungsglied (61) dazu konfiguriert ist, durch Bewegen von der ersten Position in die zweite Position mehrere Klingen (24, 57-60) von einer der jeweiligen Klinge zugeordneten Position außerhalb der Stützen (22, 51-54) in einer der jeweiligen Klinge zugeordnete Position innerhalb der Stützen zu bewegen.

4. Vorrichtung nach Anspruch 2 oder 3, wobei das Betätigungsglied (61) mit mindestens einem Magneten (62) versehen ist und entlang einer Bahn beweglich ist, entlang der sich mehrere Magnete (64) befinden, die so angeordnet sind, dass das Betätigungsglied (61) während einer Bewegung entlang der Bahn zwischen der ersten und der zweiten Position hin- und herbewegt wird.

5. Vorrichtung nach einem der vorhergehenden Ansprüche, wobei die Stützen zwei parallele Stifte (22) umfassen, insbesondere Stifte (22), die mit einer lokalen Reduzierung (26) ihrer Dicke versehen sind, um einen Aufnahmeraum für ein Ei zu bilden.

6. Vorrichtung nach einem der vorhergehenden Ansprüche, wobei die Verriegelung (27) so um eine Drehachse (28) geklemmt ist, dass sie zwischen der ersten und der zweiten Position drehbar ist, so dass sie zwischen der ersten und der zweiten Position durch Drehung um die Drehachse (28) bewegbar ist.

7. Vorrichtung nach einem der vorhergehenden Ansprüche, wobei mindestens eine der Stützen (22) eine Drehachse umfasst, um die die mindestens eine Klinge dahingehend angeordnet ist, drehbar zu sein.

8. Vorrichtung nach Anspruch 6, wobei die Klemme (31) durch einen Klemmring (32) gebildet wird, der eine Aktivierungsfläche (32) umfasst und dazu konfiguriert ist, eine Drehung der Klemme (32) bezüglich der Drehachse (28) zu sperren, wenn eine Kraft auf die Aktivierungsfläche (32) ausgeübt wird.

9. Vorrichtung nach Anspruch 8, wobei der Klemmring eine Aktivierungsvorrichtung (33) zum Ausüben einer Klemmkraft auf die Aktivierungsfläche (32) umfasst.

10. Vorrichtung nach Anspruch 9, wobei mehrere Klemmen (31) um dieselbe Drehachse (28) angeordnet sind und wobei eine Aktivierungsvorrichtung (33) zur gleichzeitigen Aktivierung der Aktivierungsflächen (32) vorgesehen ist.

11. Vorrichtung nach einem der vorhergehenden Ansprüche, wobei die Stützen (22, 51-54) auseinander bewegt werden können, um die Hälften eines zerbrochenen Eis auseinander zu bewegen.

12. Vorrichtung nach einem der vorhergehenden Ansprüche, die eine Zufuhreinheit (35) zur Aufnahme von Eiern (23, 55, 56) von einer Rollenbahn (34) und deren Positionierung auf den Stützen (22, 51-54) umfasst.

13. Vorrichtung nach Anspruch 12, wobei die Zufuhreinheit eine drehbare Achse (36) umfasst, die mit Fächern (37) zum Aufnehmen und Zuführen von Eiern, in Abhängigkeit von der Ausrichtung, versehen ist, wobei die Zufuhreinheit (35) zwischen einem Förderband und den Stützen (22) vorgesehen ist.

14. Anordnung mehrerer Vorrichtungen nach einem der vorhergehenden Ansprüche, die ein gemeinsames Betätigungsglied (61) umfasst, das in einem Karussell zum dahingehenden Transportieren des Betätigungsglieds (61) an mindestens zwei Magneten (64) vorbei, das Betätigungsglied (61) jeweils zwischen einer ersten und einer zweiten Position zu bewegen, aufgenommen ist.

## Revendications

1. Dispositif (21, 50) pour casser des oeufs (23, 55, 56), comprenant :
au moins une paire de supports (22, 51-54) pour un oeuf ;
au moins une lame (24, 57-60),
qui peut être déplacé d'une position extérieure aux supports à une position intérieure aux supports pour fendre un oeuf situé sur les supports ;
un verrou (27) pour fixer la position d'un oeuf placé sur les supports ;
le verrou pouvant être déplacé entre :
une première position dans laquelle le verrou débloque un espace pour placer un oeuf sur les supports ; et
une seconde position dans laquelle le verrou bloque un espace pour retirer un oeuf (55, 56) des supports (51-54) ;
**caractérisé en ce que**
la périphérie du verrou (27) est pourvue d'une rugosité (30), telle qu'une denture, pour augmenter la prise, et le verrou (27) étant pourvu d'une pince (31) réglable de sorte à permettre au verrou de pouvoir être déplacé dans une première position par rapport à la pince (31) et à permettre à la pince (31) d'entrer en contact avec la rugosité (30) sur le verrou (27) dans un second état, la pince étant conçue
pour s'assurer que le verrou s'appuie sur l'oeuf dans la seconde position sans exercer de pression ou pour s'assurer que le verrou est positionné juste au-dessus de l'oeuf.

2. Dispositif selon la revendication 1, comprenant un organe de commande (61) pour déplacer l'au moins une lame (24, 57-60), l'organe de commande (61) ayant au moins une première position dans laquelle la lame est située dans la position à l'extérieur des supports (22, 51-54) et une seconde position dans laquelle la lame est située dans la position à l'intérieur des supports.

3. Dispositif selon la revendication 2, l'organe de commande (61) étant conçu pour déplacer, en passant de la première à la seconde position, plusieurs lames (24, 57-60) d'une position à l'extérieur des supports (22, 51-54) associés à la lame respective à une position à l'intérieur des supports associés à la lame respective.

4. Dispositif selon la revendication 2 ou 3, l'organe de commande (61) étant pourvu d'au moins un aimant (62) et pouvant être déplacé le long d'un chemin sur lequel se trouvent plusieurs aimants (64) disposés de sorte que l'organe de commande (61) passe de la première à la seconde position et vice-versa au cours de son déplacement le long du chemin.

5. Dispositif selon l'une des revendications précédentes, les supports comprenant deux broches parallèles (22), en particulier des broches (22) pourvues d'une réduction locale (26) de leur épaisseur afin de former un espace de logement pour un oeuf.

6. Dispositif selon l'une des revendications précédentes, le verrou (27) étant serré autour d'un axe de rotation (28) de sorte à pouvoir tourner entre la première et la seconde position, afin d'être déplacé entre la première et la seconde position par rotation autour de l'axe de rotation (28).

7. Dispositif selon l'une des revendications précédentes, au moins un des supports (22) comprenant un axe de rotation autour duquel l'au moins une lame est disposée de sorte à pouvoir tourner.

8. Dispositif selon la revendication 6, la pince (31) étant formée par un anneau de serrage (32) qui comprend une surface d'activation (32) et est conçu pour bloquer la rotation de la pince (32) par rapport à l'axe de rotation (28) si une force est exercée sur la surface d'activation (32).

9. Dispositif selon la revendication 8, l'anneau de serrage comprenant un activateur (33) afin d'exercer une force de serrage sur la surface d'activation (32).

10. Dispositif selon la revendication 9, plusieurs pinces (31) étant disposées autour du même axe de rotation (28) et un activateur (33) étant fourni pour activer simultanément les surfaces d'activation (32).

11. Dispositif selon l'une des revendications précédentes, les supports (22, 51-54) pouvant être écartés afin d'écarter les moitiés d'un oeuf cassé.

12. Dispositif selon l'une des revendications précédentes, comprenant une unité de distribution (35) pour recevoir les oeufs (23, 55, 56) d'un chemin de roulement (34) et les positionner sur les supports (22, 51-54).

13. Dispositif selon la revendication 12, l'unité de distribution comprenant un axe rotatif (36) pourvu de compartiments (37) pour loger et distribuer les oeufs, selon l'orientation, laquelle unité de distribution (35) étant placée entre une bande d'alimentation et les supports (22).

14. Ensemble de plusieurs dispositifs selon l'une quelconque des revendications précédentes, comprenant un organe de commande commun (61), logé dans un carrousel pour transporter l'organe de commande (61) devant au moins deux aimants (64) afin de déplacer l'organe de commande (61) entre une première et une seconde position, respectivement.
